# EUROPÄISCHE PATENTSCHRIFT

(11) **EP 4 254 590 B1**
(45) Veröffentlichungstag und Bekanntmachung des Hinweises auf die Patenterteilung: **01.01.2025**
(21) Anmeldenummer: 22165913.9
(22) Anmeldetag: 31.03.2022
(51) Int. Cl.: H01M 10/06, H01M 50/609

(54) **FÜLLVORRICHTUNG FÜR BATTERIEZELLEN UND VERFAHREN**
BATTERY CELL FILLING DEVICE AND METHOD
DISPOSITIF DE REMPLISSAGE POUR ÉLÉMENTS DE BATTERIE ET PROCÉDÉ

(43) Veröffentlichungstag der Anmeldung: 04.10.2023
(73) Patentinhaber: HOPPECKE Batterien GmbH & Co. KG., 59929 Brilon (DE)
(72) Erfinder: SCHÖRMANN, Nicolas, 59929 Brilon-Hoppecke (DE); KAPORIN, Andreas, 59757 Arnsberg (DE); GÖTTE, Berthold, 34431 Marsberg (DE)
(74) Vertreter: Brinkmann & Partner

(56) Entgegenhaltungen:
- DE-A1- 102012 109 032
- DE-A1- 102012 208 222
- US-A1- 2016 348 265

## Beschreibung

Die Erfindung betrifft eine vollautomatische Füllvorrichtung für Batteriezellen, insbesondere Blei-Säure Akkumulatorzellen. Außerdem betrifft die Erfindung ein Verfahren zur Befüllung von Batteriezellen, insbesondere Blei-Säure Akkumulatorzellen, mittels einer erfindungsgemäßen vollautomatischen Füllvorrichtung.

Prinzipiell sind Füllvorrichtungen für Batteriezellen aus dem Stand der Technik bekannt. Mit ihnen können Batteriezelltypen, welche einen flüssigen Elektrolyten, wie etwa eine wässrige Elektrolytlösung, benötigen, mit Elektrolyt befüllt werden.

Bei bekannten Vorrichtungen und Verfahren ist es bislang Standard, die benötigte Elektrolytlösung in entsprechenden Anlagen im Batch-Verfahren herzustellen und anschließend entweder einzulagern oder einer gesonderten Dosieranlage zuzuführen, in welcher die Batteriezellen anschließend mit Elektrolytlösung befüllt werden.

Dieser Verfahrensablauf hat sich als vergleichsweise unflexibel und planungsintensiv erwiesen. Je nach Art und Größe der Batteriezelle werden qualitativ und/oder quantitativ verschieden eingestellte Elektrolytlösungen benötigt, die nach den bisher bekannten Verfahren alle vorproduziert und gegebenenfalls auf einen späteren Einsatz wartend gelagert werden müssen. Ein weiterer Nachteil ist, dass die Qualität von Elektrolytlösungen mit zunehmender Lagerdauer abnimmt.

Darüber hinaus ist es nicht möglich, etwaige Fehler bei der Produktion des Elektrolytbatches zu korrigieren, sodass minderqualitative Elektrolytlösung verworfen werden muss.

Es besteht daher ein vitales wirtschaftliches Interesse daran, die vorgenannten Nachteile zu beheben und Herstellungs- und Dosiervorgang flexibler und wirtschaftlicher zu gestalten.

Der Erfindung liegt damit die **Aufgabe** zu Grunde, die aus dem Stand der Technik bekannten Nachteile zu beheben.

Zur **Lösung** der Aufgabe schlägt die Erfindung vorrichtungsseitig eine vollautomatische Füllvorrichtung zur Befüllung von Batteriezellen, insbesondere Blei-Säure Akkumulatorzellen, mit Elektrolytlösung vor, insbesondere einer schwefelsäurehaltigen Elektrolytlösung, aufweisend eine Mischeinheit, insbesondere einen Mischzylinder, zur Herstellung von Elektrolytlösung aus mehreren Komponenten, eine Dosiereinheit zur Einleitung der Elektrolytlösung in die Batteriezelle, wobei die Dosiereinheit mit der Mischeinheit strömungstechnisch verbunden und in Strömungsrichtung der Elektrolytlösung dieser nachgeschaltet ist und aufweisend eine Steuer-/Regeleinheit zur vollautomatisierten Steuerung und Regelung wenigstens von Mischeinheit und Dosiereinheit, aufweisend eine digitale Datenverarbeitungseinrichtung, einen digitalen Datenspeicher sowie mit Mischeinheit und/oder Dosiereinheit datenübertragungstechnisch verbundene Sensoren und Stellglieder.

Die erfindungsgemäße vollautomatische Füllvorrichtung erlaubt die Herstellung und Befüllung von Batteriezellen in einem zusammenhängenden kontinuierlichen Verfahren durch eine einzige Vorrichtung. Im Unterschied zum Stand der Technik wird die benötigte Elektrolytlösung unmittelbar vor der Befüllung der Batteriezelle in der Mischeinheit aus den hierfür benötigten Edukten hergestellt. Eine aufwändige Lagerhaltung der Elektrolytlösung in großen Mengen und der Transport von der Mischanlage zur Dosieranlage entfällt vollständig. Lediglich die Ausgangsstoffe für die Elektrolytlösung müssen bereitgestellt werden. Darüber hinaus erlaubt die erfindungsgemäße Vorrichtung über die Steuer-/Regeleinheit die flexible Steuerung der Elektrolytzusammensetzung und die Einstellung der Konzentrationen der einzelnen Komponenten in Abhängigkeit von vorgebbaren SOLL-Werten. Insbesondere mit Blick auf Blei-Säure Akkumulatorzellen ist dies von entscheidendem Vorteil. Dies deshalb, da die Säuredichte (Massenkonzentration in g/cm³) mittels der Steuer-/Regeleinheit nach Bedarf auch während des Eindosierens in die Batteriezelle konstant gehalten oder verändert werden kann. Die Steuer-/Regeleinheit ist vorzugsweise zu diesem Zweck sensorisch mit der Dosiereinheit einerseits und der Mischeinheit andererseits verbunden.

Vorzugsweise ist die erfindungsgemäße Vorrichtung dazu bestimmt, aus Blei-Säure Akkumulatorzellen gebildete Batterien mit hoher Leistung mit Elektrolytlösung zu befüllen. Ein Batterieblock ist dabei typischerweise aus sechs Batteriezellen gebildet. Die erfindungsgemäße Vorrichtung ist vorzugsweise dazu ausgebildet, die sechs Zellen eines Batterieblocks zeitgleich zu befüllen. Zu diesem Zweck werden die zu Batterieblöcken zusammengefassten Batteriezellen blockweise der erfindungsgemäßen Vorrichtung zugeführt, befüllt und entnommen. Durch entsprechende Skalierung ist es jedoch auch möglich, Einzelzellbatterien oder Batterieblöcke mit bis zu 12 Batteriezellen gleichzeitig zu befüllen. Für den Transport der Batterieblöcke verfügt die erfindungsgemäße Vorrichtung vorzugsweise über automatisiert ansteuerbare Fördermittel, insbesondere Förderbänder.

Die erfindungsgemäße Dosiereinheit dient der Einleitung der zuvor in der Mischeinheit hergestellten Elektrolytlösung in die Batteriezellen. Sind die zu befüllenden Batteriezellen zu Batterieblöcken zusammengefasst, kann die Einleitung entweder zeitlich versetzt in beliebig vorgebbarer Reihenfolge erfolgen. Alternativ ist eine zeitgleiche Befüllung aller Batteriezellen des Batterieblocks bevorzugt möglich. In dieser Hinsicht kann die Dosiereinheit einen robotergestützt verfahrbaren Düsenkopf aufweisen, der die Batteriezellen in der vorgebbaren Reihenfolge anfährt und nacheinander befüllt. Alternativ kann eine Anzahl Düsenköpfe in Entsprechung der Anzahl der gleichzeitig zu befüllenden Batteriezellen vorgesehen sein. Auch eine Kombination ist denkbar, in der beispielsweise zwei Düsenköpfe vorgesehen sind, von denen jeder eine vorgebbare Anzahl Batteriezellen zur Einleitung der Elektrolytlösung anfährt.

Gemäß einem bevorzugten Merkmal der Erfindung ist die Mischeinheit als Mischzylinder ausgebildet. Hierdurch ergeben sich im zylindrischen Innenraum der Mischeinheit vorteilhafte Strömungsverhältnisse, die für eine verbesserte Durchmischung der Elektrolytlösung sorgen. Die Mischeinheit ist vorzugsweise sensorisch und steuerungstechnisch mit der Steuer-/Regeleinheit verbunden. Ferner ist sie dazu ausgebildet, die Herstellung von Elektrolytlösung bei Tiefsttemperaturen zwischen -25 °C und 0 °C zu gestatten. Die in der Mischeinheit hergestellte Elektrolytlösung ist vorzugsweise für den Einsatz in einem Blei-Säure Akkumulator geeignet. Diese Elektrolytlösung ist insbesondere aus Schwefelsäure, Wasser und Silica zusammengesetzt. Die Konzentration der Komponenten ist je nach gewünschter Säuredichte mittels der Steuer-/Regeleinheit frei einstellbar und regelbar.

Gemäß einem bevorzugten Merkmal der Erfindung weist die Vorrichtung einen mit dem Mischzylinder und/oder der Dosiereinheit strömungstechnisch verbundenen Vorratsbehälter zur Lagerung von Elektrolytlösung auf. Der Vorratsbehälter dient dem Zweck, einen gewissen Überschuss an Elektrolytlösung aufzunehmen und für eine spätere Verwendung, insbesondere für die Befüllung des im Produktionsablauf nächsten Batterieblocks oder dem Ausgleich von Differenzen in der Füllmenge zwischen Zellen eines Batterieblocks, bereitzuhalten. Der Vorratsbehälter ist daher nicht mit den aus dem Stand der Technik bekannten Lagertanks zu vergleichen, in welchen demgegenüber Elektrolytlösung für viele Produktionschargen an Batterieblöcken lagern. Der erfindungsgemäße Vorratsbehälter ist vorzugsweise dazu ausgebildet, Elektrolytlösung bei Temperaturen von bis zu -25 °C zu lagern.

Erfindungsgemäß ist eine Vibrationseinheit zur Erzeugung hochfrequenter mechanischer Schwingungen in der Elektrolytlösung vorgesehen. Die Vibrationseinheit kann vorzugsweise als Rüttelplatte ausgebildet sein, auf der der Batterieblock angeordnet ist. Gemäß dieser Ausgestaltung wird die Elektrolytlösung damit mittelbar über den auf der Rüttelplatte angeordneten Batterieblock in hochfrequente Schwingung versetzt. Gemäß einer alternativen Ausgestaltung der Vibrationseinheit weist diese Ultraschall-Sonden auf, von denen je eine in jeweils eine mit Elektrolytlösung befüllte Batteriezelle einführbar ist. Durch die Ultraschall-Sonden kann auf diesem Wege die Elektrolytlösung unmittelbar in Schwingung versetzt werden. Unabhängig von der verwendeten Alternative hat sich gezeigt, dass durch die Übertragung von Vibrationen auf die Elektrolytlösung deren Eindringverhalten in Teile der Batteriezelle, insbesondere Separatoren und Elektroden, verbessert wird. Insbesondere dringt der Elektrolyt tiefer in die Porenstruktur von Separatoren und Elektroden ein. Auch wird der Eindringprozess durch das hochfrequente Schwingen der Elektrolytlösung in vorteilhafter Weise beschleunigt. Die Vibrationseinheit ist vorzugsweise dazu ausgebildet, die Elektrolytlösung während und/oder nach der Einleitung in die Batterie in hochfrequente Schwingung zu versetzen. Insbesondere kann in diesem Zusammenhang zur Beschleunigung des Vorgangs vorgesehen sein, die Vibrationseinheit zu aktivieren, sobald eine vorgebbare Füllmenge in den Batteriezellen erreicht, aber der Füllvorgang noch nicht abgeschlossen ist.

Gemäß einem bevorzugten Merkmal der Erfindung ist eine Druckerzeugungseinheit zur Einstellung eines Unter- und/oder Überdrucks in der Batteriezelle vorgesehen. Vorzugsweise ist die Druckeinheit dazu ausgebildet, Unterdruck, insbesondere ein Vakuum, und Überdruck zeitlich alternierend auf die Batteriezelle wirken zu lassen. Vorteilhafterweise werden hierdurch Eindringtiefe und -geschwindigkeit der Elektrolytlösung in Teile der Batteriezelle, wie insbesondere Separatoren und Elektroden, weiter verbessert. Die Druckerzeugungseinheit weist vorzugsweise eine Membranpumpe auf.

Gemäß einem bevorzugten Merkmal der Erfindung weist die Vorrichtung ein Gehäuse auf, in welchem vorzugsweise alle Komponenten der Vorrichtung, zumindest jedoch Mischeinheit und Dosiereinheit, angeordnet sind. Insbesondere kann vorgesehen sein, dass Vorratsbehälter, Steuer-/Regeleinheit, Druckerzeugungseinheit und/oder Vibrationseinheit ebenfalls in dem Gehäuse angeordnet sind.

Gemäß einem weiteren Merkmal der Erfindung ist vorgesehen, dass die Steuer-/Regeleinheit dazu ausgebildet ist, kontinuierlich IST-Werte mit einem abrufbar hinterlegten SOLL-Wert zu vergleichen und bei unter- und/oder überschreiten des SOLL-Wertes durch wenigstens einen IST-Wert regelungstechnische Maßnahmen zur Angleichung der IST-Werte an den SOLL-Wert zu bewirken. Insbesondere ist die Steuer-/Regeleinheit in der Lage, IST-Werte mit Bezug auf Konzentrationen, Temperatur und/oder Gewicht sensorisch zu erfassen und mit abrufbar in einem digitalen Datenspeicher hinterlegten SOLL-Werten zu vergleichen. Bei einer Abweichung vom SOLL-Wert innerhalb vorgebbarer Toleranzen wird seitens der Steuer-/Regeleinheit die Mischeinheit und/oder die Dosiereinheit derart angesteuert, dass die mit dem IST-Wert assoziierte Messgröße wertetechnisch an den SOLL-Wert angeglichen wird. Beispielsweise wird die Säuredichte der Elektrolytlösung sensorisch mittels einer Durchlaufmessung in der Dosiereinheit erfasst. Daraufhin wird ein Vergleich mit einem hinterlegten SOLL-Wert durchgeführt. Im Falle einer den Toleranzbereich über- oder unterschreitenden Abweichung erfolgt seitens der Steuer-/Regeleinheit eine Ansteuerung der Mischeinheit, um die Säuredichte wieder auf den SOLL-Wert einzuregeln.

Die Steuer-/Regeleinheit verfügt über Sensoren zur Erfassung von IST-Werten, einen digitalen Datenspeicher zur abrufbaren Hinterlegung von SOLL-Werten, eine Datenverarbeitungseinrichtung zur Durchführung eines SOLL/IST-Vergleichs und über eine steuerungstechnische Verbindung mit entsprechenden Stellgliedern zur Beeinflussung der zu regelnden Größen, wie etwa Konzentrationen, Temperatur und/oder Füllmenge. Stellglieder im Sinne der Erfindung sind beispielsweise Ventile, Rührwerke und dergleichen.

Zur **Lösung** der Aufgabe schlägt die Erfindung ferner verfahrensseitig ein Verfahren zur vollautomatischen Befüllung von Batteriezellen mittels einer vollautomatischen Füllvorrichtung gemäß der Erfindung vor, bei dem eine Elektrolytlösung aus mehreren Komponenten in einer Mischeinheit hergestellt wird, wobei die Konzentrationen der einzelnen Komponenten mittels der Steuer-/Regeleinheit automatisiert auf vorgebbare Werte eingestellt werden und bei dem die Elektrolytlösung mittels einer Dosiereinheit in die Batteriezelle eingeleitet wird, wobei die Füllmenge der Elektrolytlösung in der Batteriezelle mittels der Steuer-/Regeleinheit automatisiert auf einen vorgebbaren Wert eingestellt wird.

Das erfindungsgemäße Verfahren erlaubt in Verbindung mit der erfindungsgemäßen Vorrichtung die Herstellung und Befüllung von Batteriezellen in einem zusammenhängenden kontinuierlichen Verfahren. Im Unterschied zum Stand der Technik wird die benötigte Elektrolytlösung unmittelbar vor der Befüllung der Batteriezelle in der Mischeinheit aus den hierfür benötigten Edukten hergestellt. Eine aufwändige Lagerhaltung der Elektrolytlösung in großen Mengen und der Transport von der Mischanlage zur Dosieranlage entfällt vollständig. Lediglich die Ausgangsstoffe für die Elektrolytlösung müssen bereitgestellt werden. Darüber hinaus erlaubt die erfindungsgemäße Vorrichtung über die Steuer-/Regeleinheit die flexible Steuerung der Elektrolytzusammensetzung und die Einstellung der Konzentrationen der einzelnen Komponenten in Abhängigkeit von vorgebbaren SOLL-Werten. Insbesondere mit Blick auf Blei-Säure Akkumulatorzellen ist dies von entscheidendem Vorteil. Dies deshalb, da die Säuredichte mittels der Steuer-/Regeleinheit nach Bedarf auch während des Eindosierens in die Batteriezelle konstant gehalten oder verändert werden kann.

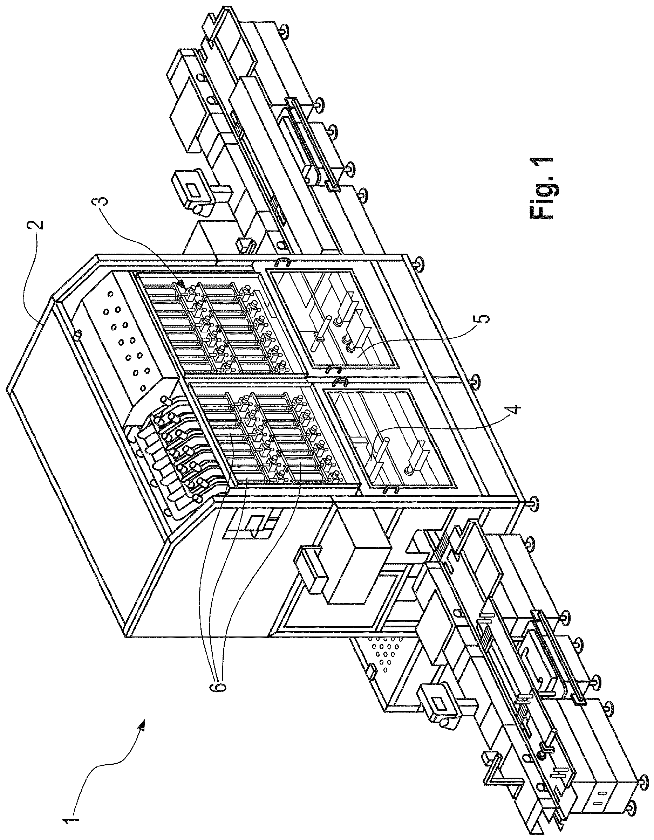

Die Erfindung wird nachfolgend anhand eines Ausführungsbeispiels erläutert. Dabei zeigt Fig.1 eine vollautomatische Füllvorrichtung gemäß der Erfindung.

Figur 1 zeigt eine vollautomatische Füllvorrichtung 1 gemäß der Erfindung. Die Füllvorrichtung 1 dient vorliegend der Befüllung von Blei-Säure Akkumulatoren mit Elektrolytlösung mit einer vorgebbaren Säuredichte. Die zu befüllenden Akkumulatoren bestehen aus einem Batterieblock aus sechs Batteriezellen. Jede Batteriezelle ist zum Zeitpunkt der Befüllung bereits mit Separatoren und Elektroden ausgestattet.

Die Füllvorrichtung 1 weist ein Gehäuse 2 auf. In dem Gehäuse 2 sind eine Mischeinheit 3, eine Dosiereinheit 4, eine nicht dargestellte Steuer-/Regeleinheit, ein Förderband 5, eine nicht dargestellte Vibrationseinheit und eine nicht dargestellte Druckerzeugungseinheit angeordnet.

In der Mischeinheit 3, welche vorliegend eine Vielzahl von Mischzylindern 6 umfasst, wird die Elektrolytlösung aus Schwefelsäure, Wasser und Silica hergestellt. Nach der Herstellung wird die Elektrolytlösung unmittelbar der Dosiereinheit 4 zugeführt, mittels welcher die Elektrolytlösung in die Batteriezellen eingeleitet wird.

Ein Förderband 5 dient vorliegend dem An-, Durch- und Abtransport der Batteriezellen.

Säuredichte und Füllmenge sind vorliegend sensorisch erfassbar und mittels der nicht dargestellten Steuer-/Regeleinheit durch einen SOLL/IST-Wert-Vergleich und davon abhängiger Ansteuerung entsprechender Stellglieder auf einen vorgebbaren SOLL-Wert einstellbar bzw. einregelbar. Die IST-Wert Erfassung erfolgt mittels entsprechender Sensoren, die insbesondere in der Dosiereinheit 4 und/oder der Mischeinheit 3 angeordnet sind.

Die nicht dargestellte Druckerzeugungseinheit dient der Beaufschlagung der Batteriezelle mit einem Vakuum und/oder mit einem Überdruck. Dies dient der verbesserten Elektrolytaufnahme von in den Batteriezellen angeordneten Separatoren und Elektroden.

Die erfindungsgemäße Vorrichtung 1 verfügt ferner über eine Vibrationseinheit in Form einer in das Förderband integrierten Rüttelplatte. Die Vibrationseinheit dient der verbesserten Elektrolytaufnahme von in den Batteriezellen angeordneten Separatoren und Elektroden.

Prinzipiell laufen sämtliche Arbeitsschritte in der Vorrichtung 1 vollautomatisiert ab. Die einzelnen Komponenten werden dabei von der Steuer-/Regeleinheit gesteuert. Hierzu verfügt die Steuer-/Regeleinheit über eine Datenverarbeitungseinheit, welche eine Steuerung der Komponenten der Vorrichtung in Abhängigkeit eines auf der Datenverarbeitungseinheit ausgeführten Steuerungsprogramms vornimmt.

Darüber hinaus verfügt die Vorrichtung 1 über eine vollautomatisierte Selbstreinigungsfunktion, welche ebenfalls von der Steuer-/Regeleinheit gesteuert wird. Die Arbeitssicherheit wird hierdurch entscheidend verbessert.

### Bezugszeichen

- 1: Füllvorrichtung
- 2: Gehäuse
- 3: Mischeinheit
- 4: Dosiereinheit
- 5: Förderband
- 6: Mischzylinder

## Patentansprüche

1. Vollautomatische Füllvorrichtung zur Befüllung von Batteriezellen, insbesondere Blei-Säure Akkumulatorzellen, mit Elektrolytlösung, insbesondere einer schwefelsäurehaltigen Elektrolytlösung, aufweisend
a. eine Mischeinheit, insbesondere einen Mischzylinder, zur Herstellung von Elektrolytlösung aus mehreren Komponenten bei Temperaturen zwischen -25 °C und 0° C;
b. eine Dosiereinheit zur Einleitung der Elektrolytlösung in die Batteriezelle, wobei die Dosiereinheit mit der Mischeinheit strömungstechnisch verbunden und in Strömungsrichtung der Elektrolytlösung dieser nachgeschaltet ist;
c. eine Steuer-/Regeleinheit zur vollautomatisierten Steuerung und Regelung wenigstens von Mischeinheit und Dosiereinheit, aufweisend eine digitale Datenverarbeitungseinrichtung, einen digitalen Datenspeicher sowie mit Mischeinheit und/oder Dosiereinheit datenübertragungstechnisch verbundene Sensoren und Stellglieder,
**gekennzeichnet durch** eine Vibrationseinheit zur Erzeugung hochfrequenter mechanischer Schwingungen in der Elektrolytlösung.

2. Füllvorrichtung nach Anspruch 1, **gekennzeichnet durch** einen mit dem Mischzylinder und/oder der Dosiereinheit strömungstechnisch verbundenen Vorratsbehälter, zur Lagerung der Elektrolytlösung bei Temperaturen bis zu -25 °C.

3. Füllvorrichtung nach einem der Ansprüche 1 oder 2, **gekennzeichnet durch** ein Fördermittel, insbesondere einem Förderband zur Zuführung der Batteriezellen zu der Dosiereinheit.

4. Füllvorrichtung nach Anspruch 1, **dadurch gekennzeichnet, dass** die Vibrationseinheit dazu ausgebildet ist, die Elektrolytlösung während und/oder nach der Einleitung in eine Batteriezelle in hochfrequente Schwingung zu versetzen.

5. Füllvorrichtung nach einem der vorhergehenden Ansprüche, **gekennzeichnet durch** eine Druckerzeugungseinheit zur Einstellung eines Unter- und/oder Überdrucks in der Batteriezelle.

6. Füllvorrichtung nach einem der vorhergehenden Ansprüche, **dadurch gekennzeichnet, dass** die Steuer-/Regeleinheit dazu ausgebildet ist, kontinuierlich IST-Werte mit einem abrufbar hinterlegten SOLL-Wert zu vergleichen und bei unter- und/oder überschreiten des SOLL-Wertes durch wenigstens einen IST-Wert regelungstechnische Maßnahmen zur Angleichung der IST-Werte an den SOLL-Wert zu bewirken.

7. Füllvorrichtung nach einem der vorhergehenden Ansprüche, **gekennzeichnet durch** ein Gehäuse, in welchem zumindest die Mischeinheit und die Dosiereinheit angeordnet sind.

8. Verfahren zur vollautomatischen Befüllung von Batteriezellen mittels einer vollautomatischen Füllvorrichtung gemäß einem der vorhergehenden Ansprüche, bei dem eine Elektrolytlösung aus mehreren Komponenten in einer Mischeinheit hergestellt wird, wobei die Konzentrationen der einzelnen Komponenten mittels der Steuer-/Regeleinheit automatisiert auf vorgebbare Werte eingestellt werden und bei dem die Elektrolytlösung mittels einer Dosiereinheit in die Batteriezellen eingeleitet wird, wobei die Füllmenge der Elektrolytlösung in den Batteriezellen mittels der Steuer-/Regeleinheit automatisiert auf einen vorgebbaren Wert eingestellt wird.

9. Verfahren nach Anspruch 8, **dadurch gekennzeichnet, dass** die Elektrolytlösung unter Beaufschlagung eines Vakuums und/oder eines Überdrucks in die Batteriezellen eingeleitet wird.

10. Verfahren nach einem der Ansprüche 8 oder 9, **dadurch gekennzeichnet, dass** die Elektrolytlösung in den Batteriezellen mittels Vibration in hochfrequente Schwingung versetzt wird.

11. Verfahren nach einem der Ansprüche 8 bis 10, wobei die Elektrolytlösung in der Mischeinheit in einem Temperaturbereich zwischen -25°C und 0°C hergestellt wird.

12. Verfahren nach einem der Ansprüche 8 bis 11, **dadurch gekennzeichnet, dass** zur automatisierten Einstellung der Konzentrationen der Komponenten in der Elektrolytlösung und/oder der Füllhöhe der Elektrolytlösung in den Batteriezellen, kontinuierlich IST-Werte mit einem abrufbar hinterlegten SOLL-Wert verglichen und bei unter- und/oder überschreiten des SOLL-Wertes durch wenigstens einen IST-Wert regelungstechnische Maßnahmen seitens der Steuer-/Regeleinheit zur Angleichung der IST-Werte an den SOLL-Wert ergriffen werden.

## Claims

1. Fully automatic filling device for filling battery cells, in particular lead-acid accumulator cells, with an electrolyte solution, in particular a sulfuric electrolyte solution, the device comprising
a. a mixing unit, in particular a mixing cylinder, for preparing an electrolyte solution from several components at temperatures between -25°C and 0°C;
b. a dosing unit for introducing the electrolyte solution into the battery cell, wherein the dosing unit is fluidically connected to the mixing unit and arranged downstream thereof in the direction of flow of the electrolyte solution;
c. a controlling/regulating unit for fully automatic control and regulation of at least the mixing unit and the dosing unit, the controlling/regulating unit comprising a digital data processing means, a digital data storage as well as sensors and actuators connected to the mixing unit and/or dosing unit in data transmitting manner,
**characterized by** a vibration unit for generating high-frequency vibrations within the electrolyte solution.

2. Filling device according to claim 1, **characterized by** a reservoir fluidically connected to the mixing cylinder and/or dosing unit, for storage of the electrolyte solution at temperatures of up to -25°C.

3. Filling device according to one of the claims 1 or 2, **characterized by** a conveyor means, in particular a conveyor belt, for feeding the battery cells to the dosing unit.

4. Filling device according to claim 1, **characterized in that** the vibration unit is designed to oscillate the electrolyte solution at a high frequency during and/or after the introduction into a battery cell.

5. Filling device according to any of the preceding claims, **characterized by** a pressure generating device for setting an under- and/or overpressure in the battery cell.

6. Filling device according to any of the preceding claims, **characterized in that** the controlling/regulating unit is designed to continuously compare actual values with a retrievable stored setpoint and when at least one actual value falls below and/or exceeds the setpoint, to effect control-related measures in order to adjust the actual values to the setpoint.

7. Filling device according to any of the preceding claims, **characterized by** a housing in which at least the mixing unit and the dosing unit are accommodated.

8. Method for fully automatically filling battery cells using of a fully automatic filling device according to any of the preceding claims, in which method an electrolyte solution from several components is prepared in a mixing unit, wherein the concentrations of the individual components are set by means of the control/regulating unit automatically to pre-definable values, and in which the electrolyte solution is introduced by means of the dosing unit into the battery cells, wherein the filling amount of the electrolyte in the battery cells is set is an automated manner by means of the control/regulating unit to a pre-definable value.

9. Method according to claim 8, **characterized in that** the electrolyte solution is introduced into the battery cells under application of a vacuum and/or an overpressure.

10. Method according to any of claims 8 or 9, **characterized in that** the electrolyte solution in the battery cells is oscillated at a high frequency by means of vibration.

11. Method according to any of claims 8 to 10, wherein the electrolyte solution in the mixing unit is prepared within a temperature range between -15°C and 0°C.

12. Method according to any of claims 8 to 11, **characterized in that** for an automated setting of the concentration of the components in the electrolyte solution and/or the filling level of the electrolyte in the battery cells, actual values are continuously compared with retrievable stored setpoints and when at least one actual value falls below and/or exceeds the setpoint, control-related measures are effected on behalf of the control/regulation unit in order to adjust the actual values to the setpoint.

## Revendications

1. Dispositif de remplissage entièrement automatique pour remplir des éléments de batterie, en particulier des éléments d'accumulateur au plomb, avec une solution d'électrolyte, en particulier une solution d'électrolyte sulfurique, le dispositif comprenant
a. une unité de mélange, en particulier un cylindre de mélange, pour préparer une solution d'électrolyte à partir de plusieurs composants à des températures comprises entre -25°C et 0°C;
b. une unité de dosage pour introduire la solution d'électrolyte dans l'élément de batterie, l'unité de dosage étant reliée fluidiquement à l'unité de mélange et disposée en aval de celle-ci dans le sens d'écoulement de la solution d'électrolyte;
c. une unité de commande/régulation pour la commande et la régulation entièrement automatiques d'au moins l'unité de mélange et l'unité de dosage, l'unité de commande/régulation comprenant un moyen de traitement des données numériques, un stockage des données numériques ainsi que des capteurs et des actionneurs reliés à l'unité de mélange et/ou à l'unité de dosage de manière à transmettre les données,
**caractérisé par** une unité de vibration pour générer des vibrations à haute fréquence dans la solution d'électrolyte.

2. Dispositif de remplissage selon la revendication 1, **caractérisé par** un réservoir relié fluidiquement au cylindre de mélange et/ou à l'unité de dosage, pour le stockage de la solution d'électrolyte à des températures allant jusqu'à -25°C.

3. Dispositif de remplissage selon l'une des revendications 1 ou 2, **caractérisé par** un moyen de transport, en particulier une bande transporteuse, pour acheminer les éléments de batterie vers l'unité de dosage.

4. Dispositif de remplissage selon la revendication 1, **caractérisé en ce que** l'unité de vibration est conçue pour faire osciller la solution d'électrolyte à haute fréquence pendant et/ou après l'introduction dans un élément de batterie.

5. Dispositif de remplissage selon l'une quelconque des revendications précédentes, **caractérisé par** un dispositif de génération de pression pour établir une sous-pression et/ou une surpression dans l'élément de batterie.

6. Dispositif de remplissage selon l'une quelconque des revendications précédentes, **caractérisé en ce que** l'unité de commande/régulation est conçue pour comparer en permanence les valeurs réelles avec une valeur de consigne stockée et récupérable et, lorsqu'au moins une valeur réelle est inférieure et/ou supérieure à la valeur de consigne, pour prendre des mesures de contrôle afin d'ajuster les valeurs réelles à la valeur de consigne.

7. Dispositif de remplissage selon l'une quelconque des revendications précédentes, **caractérisé par** un boîtier dans lequel sont logées au moins l'unité de mélange et l'unité de dosage.

8. Procédé de remplissage entièrement automatique d'éléments de batterie à l'aide d'un dispositif de remplissage entièrement automatique selon l'une quelconque des revendications précédentes, dans lequel une solution d'électrolyte à partir de plusieurs composants est préparée dans une unité de mélange, dans lequel les concentrations des composants individuels sont réglées automatiquement au moyen de l'unité de commande/régulation sur des valeurs prédéfinies, et dans lequel la solution d'électrolyte est introduite au moyen de l'unité de dosage dans les éléments de batterie, la quantité de remplissage de l'électrolyte dans les éléments de batterie étant réglée de manière automatisée au moyen de l'unité de commande/régulation sur une valeur prédéfinie.

9. Procédé selon la revendication 8, **caractérisée en ce que** la solution d'électrolyte est introduite dans les éléments de la batterie sous l'effet d'un vide et/ou d'une surpression.

10. Procédé selon l'une quelconque des revendications 8 ou 9, **caractérisé en ce que** la solution d'électrolyte dans les éléments de la batterie est soumise à une oscillation à haute fréquence au moyen d'une vibration.

11. Procédé selon l'une quelconque des revendications 8 à 10, dans laquelle la solution d'électrolyte dans l'unité de mélange est préparée dans une plage de température comprise entre -15°C et 0°C.

12. Procédé selon l'une quelconque des revendications 8 à 11, **caractérisé en ce que** pour un réglage automatisé de la concentration des composants dans la solution d'électrolyte et/ou du niveau de remplissage de l'électrolyte dans les éléments de la batterie, les valeurs réelles sont continuellement comparées aux valeurs de consigne stockées et récupérables et lorsque au moins une valeur réelle est inférieure et/ou supérieure à la valeur de consigne, des mesures de réglage sont prises du côté de l'unité de contrôle/régulation afin d'ajuster les valeurs réelles à la valeur de consigne.
